# EUROPÄISCHE PATENTSCHRIFT

(11) **EP 0 710 708 B1**
(45) Veröffentlichungstag und Bekanntmachung des Hinweises auf die Patenterteilung: **21.04.1999**
(21) Anmeldenummer: 95114188.6
(22) Anmeldetag: 09.09.1995
(51) Int. Cl.: C09J 133/02, C09J 7/00

(54) **Bei hoher Temperatur scherfeste, wasserlösliche Haftklebemasse**
Water-soluble adhesive shear resistant at high temperature
Adhésive aqueuse résistante au cisaillement à température haute

(30) Priorität: 12.09.1994 DE 4432368
(43) Veröffentlichungstag der Anmeldung: 08.05.1996
(73) Patentinhaber: Lohmann GmbH & Co. KG, 56567 Neuwied (DE)
(72) Erfinder: Czech, Zbigniew Dr., D-56075 Koblenz (DE)
(74) Vertreter: Flaccus, Rolf-Dieter, Dr.

(56) Entgegenhaltungen:
- DE-A- 2 360 441
- PATENT ABSTRACTS OF JAPAN vol. 095, no. 001, 28.Februar 1995 & JP 06 299132 A (OTSUKA CHEM CO LTD), 25.Oktober 1994,

## Beschreibung

Die Erfindung betrifft eine bei hoher Temperatur scherfeste, wasserlösliche Haftklebemasse und ihre Verwendung zur Herstellung von selbstklebenden Artikeln mit hoher Scherbelastbarkeit.

Bei Herstellung, Veredelung und Bedruckung von Papiererzeugnissen mit diversen Papierarten wird bei kontinuierlicher Produktion in der Papierindustrie die Forderung gestellt, durch Verbinden des Endes einer Papierrolle mit dem Anfang der nächsten Papierrolle die Papierrollen endlos zu spleißen. Auch nach dem Herausschneiden von Fehlstellen müssen die Papierenden durch Spleißen wieder verbunden werden. Zu diesem Zweck werden je nach Anwendungsfall und Erfahrung doppelseitige oder einseitige Spleißbänder eingesetzt, die sich durch hohen Tack und aggressive Klebkraft zur Papieroberfläche hierfür besonders eignen. Da in der Papierindustrie vielfach bei höheren Temperaturen, z.B. im Bereich von 180-220°C, gearbeitet wird, muß eine sichere Verklebung der Bahnenden bei diesen Temperaturen durch eine entsprechende Scherfestigkeit des Spleißbandes gewährleistet sein.
Da die herausgeschnittenen Spleißstellen unter dem Gesichtspunkt Abfallminimierung und Recycling nicht verworfen, sondern zwecks Wiederverarbeitung zurückgewonnen werden, muß die für die Herstellung von Spleißbändern eingesetzte Haftklebemasse möglichst vollständig wasserlöslich sein.

Es wurden bereits eine Reihe von unterschiedlich zusammengesetzten wasserlöslichen Haftklebemassen entwickelt und für den genannten Anwendungszweck vorgeschlagen. Der Stand der Technik auf diesem Gebiet wird durch folgende Schutzrechte widergespiegelt:

US-A 2 838 421 beschreibt eine Mischung aus Polyacrylsäure und Polyethylenglykol/Polypropylenglykol.

US-A 3 096 202 beschreibt ein doppelseitig beschichtetes Haftklebeband, dessen haftklebende Schichten ein Gemisch von Polyvinylpyrrolidon mit Polyol- oder Polyetherweichmachern und monomeren Vernetzungsmitteln enthalten.

Aus der US-A 3 321 451 ist eine Haftklebemasse bekannt, die wasserlösliches Copolymer auf Basis von Acrylsäureestern und aminogruppenhaltigen Methacrylaten enthält.

DE-C 21 42 770 erwähnt eine Haftklebemischung aus Acyrlsäureestercopolymerisaten, ethoxyliertem Polyvinylalkohol, Polyvinylmethylether und Polyvinylpyrrolidon.

DE-C 22 36 575 beschreibt Haftkleber unter Verwendung von Polyvinylether-Dispersionen.

In den US-A 3 441 430 und US-A 3 575 911 werden wasserlösliche bzw. wasserdispergierbare Haftklebemassen beschrieben, die durch Copolymerisation von wasserlöslichen, ungesättigten Säuren erzeugt werden. Die Klebrigkeit wird durch wasserlösliche Weichmacher und die Wasserlöslichkeit durch Neutralisation mit Alkalien, Ammoniak oder speziellen Aminen eingestellt.

US-A 3 865 770 beschreibt Haftkleber mit Acrylsäure/ Acrylsäureester-Copolymeren, neutralisiert mit Alkanolaminen unter Zusatz von weichmachenden Polyoxyethylenverbindungen.

Aus der DE-C 23 11 746 sind Haftkleber auf der Basis von Vinylmethylether/Maleinsäure-Copolymerisaten, abgemischt mit Alkylphenoxypolyglykolether und nicht umgesetzten Alkylphenoxyglykolethern als Weichmacher bekannt.

In der DE-A 2 360 441 wird eine wasserlösliche Haftklebemasse beschrieben, die aus Copolymer von Acrylsäure und Acrylsäureestern, klebrigmachenden Kolophoniumharzen, weichmachenden Polyoxyalkylenglykolen und Alkanolaminen zusammengesetzt ist.

DE-C 29 04 233 und EP-B 0 058 382 offenbaren Haftkleber mit Acrylsäureester/Acrylsäure-Copolymerisaten, neutralisiert mit tertiären, ethoxylierten N-Alkylalkandiaminen und Alkalien.

EP-B 0 081 846 beschreibt ein Haftklebergemisch aus Acrylsäure, Acrylsäureester/Acrylamid-Copolymerisatenabgemischt mit mehrwertigen, klebrigmachenden Alkoholen und Alkalien.

Die JP-A 73/33973 beschreibt eine haftklebende Masse mit Copolymer aus Acrylsäure und Acrylsäureethylester, die mit Natriumhydroxid neutralisiert wird und als Klebrigmacher Polyether-Polyol oder mehrwertige Alkohole enthält.

Die GB-A 941 276 beschreibt eine wasserlösliche Haftklebemasse, die aus dem Umsetzungsprodukt eines Copolymeren von Vinylmethylether und Maleinsäureanhydrid mit einem Alkohol besteht und durch Zusatz eines flüssigen Polyvinylmethylethers klebrig

US-A 4 413 080 beschreibt Haftkleber auf der Basis von carboxylgruppenhaltigen Copolymerisaten und Isooctylacrylat/Butylacrylat, abgemischt mit wasserlöslichen Polyoxyethylenderivaten und Phthalharztackifiern.

US-A 4 442 258 erwähnt als Haftkleber Alkoxyalkylacrylat/N-Alkylaminoacrylat-Copolymere abgemischt mit wasserlöslichen Polyethern- oder Polyalkohol-Derivaten.

Nach der EP-B 0 141 504 werden Haftklebemassen von carboxylgruppenhaltigen Copolymerisaten auf Isooctylacrylat/ Butylacrylat-Basis erhalten, abgemischt mit Phosphorosäureestern und OH-funktionellen ethoxylierten Weichmachern.

EP-B 0 147 067 offenbart wasserlösliche Haftklebemassen auf der Basis von 2-Ethylhexylacrylat, Methacrylsäure und hydroxylgruppenhaltigen (Meth)acrylaten.

US-A 4 518 745 beschreibt wasserlösliche Haftklebemassen, aufgebaut aus Vinylphosphonsäure, Acryl- oder Methacrylamid, Vinylsulfonsäure und Vinylphosphonsäureestern.

Nach der DE-A 33 18 600 werden wasserlösliche Haftklebemassen auf Basis von Copolymeren aus Acrylsäure mit Fumarsäure-di-(alkoxyalkyl)-estern und Vinylestern hergestellt und mit wasserlöslichen Weichmachern haftklebend eingestellt sowie durch β-Strahlung gehärtet.

DE-C 34 23 446 beschreibt wasserlösliche Haftkleber mit Terpolymeren auf Basis von N-Vinyllactam, N-Vinylsäureamiden, Acrylsäure(salzen) und Alkylvinylethern.

DE-B 38 25 527 beschreibt wasserlösliche Haftklebemassen auf β-Acryloyloxypropionsäure-Basis.

In der EP-B 0 379 932 werden wasserlösliche Haftklebemassen beschrieben, die aus wasserlöslichem Copolymerisat von Vinylcarbonsäure, hydroxylgruppenhaltigem (Meth)acrylat, N-substituiertem (Meth)acrylamidderivat und Vinylcarbonsäuresalz, abgemischt mit wasserlöslichen Weichmachern aus der Gruppe der Polyoxyalkylene, und einem Vernetzungsmittel zusammengesetzt sind.

Obwohl die in einem derart breiten Stand der Technik beschriebenen wasserlöslichen Haftklebemassen schon zum Spleißen in der Papierindustrie eingesetzt werden, weisen sie in mancher Hinsicht noch Mängel auf, die ihre technischen Einsatzmöglichkeiten stark beschränken. So sind sie in dem geforderten, relativ hohen Temperaturgebiet zwischen 180 und 220°C nicht ausreichend beständig und ihre Wasserlöslichkeit ist ebenfalls nicht ausreichend.

Der Erfindung liegt die Aufgabe zugrunde, wasserlösliche Haftklebemassen bereitzustellen, die diese Nachteile nicht mehr aufweisen und insbesondere bei erhöhten Temperaturen eine zufriedenstellende Scherfestigkeit aufweisen und bevorzugt wasserlöslich sind.

Die Lösung dieser Aufgabe gelingt bei einer Haftklebemasse der eingangs genannten Art mit der Erfindung durch eine Zusammensetzung aus den im Kennzeichen von Anspruch 1 genannten Komponenten.

Gegenstand der Erfindung ist somit eine hochtemperaturscherfeste wasserlösliche Haftklebemasse, enthaltend:
a) 100 Gewichtsteile eines wasserlöslichen Copolymerisats aus
   - mindestens 50 Gew.-% wenigstens einer Vinylcarbonsäure
   - mindestens 15 Gew.-% wenigstens eines klebrigmachenden Alkyl(meth)acrylsäureesters mit 2 bis 12 Kohlenstoffatomen im Alkylrest
   - 0 bis 20 Gew.-% wenigstens eines hydroxylgruppenhaltigen (Meth)acrylats
   - 0,05 bis 15 Gew.-% wenigstens eines polymerisationsfähigen Fotoinitiators
b) 50 bis 150 Gewichtsteile wenigstens eines wasserlöslichen Weichmachers aus der Gruppe der Polyoxyalkylene mit einer Molmasse bis 2000 Dalton
c) 0 bis 35 Gewichtsteile eines carboxyl- und/oder hydroxylgruppenhaltigen klebrigmachenden Harzes
d) 1 bis 30 Gewichtsteile eines feuchthaltenden Mittels
e) 1 bis 20 Gewichtsteile eines hydroxylgruppenhaltigen Amins
f) 0,05 bis 10 Gewichtsteile eines mit Carboxylgruppen des wasserlöslichen Copolymerisats reagierenden Vernetzers.

Die Vinylcarbonsäure, deren Anteil im wasserlöslichen Copolymerisat zwischen 50 bis 85 Gew.-% beträgt, kann aus Acrylsäure, Methacrylsäure, β-Acryloyloxypropionsäure, Vinylessigsäure, Fumarsäure, Crotonsäure, Trichloracrylsäure, Dimethylacrylsäure, Aconitsäure, Itaconsäure oder deren Mischungen bestehen. Besonders hochwertige, wasserlösliche Haftklebemassen werden beim Eincopolymerisieren von Acrylsäure oder β-Acryloyloxypropionsäure erhalten. Je höher der Gehalt an einpolymerisierter Acrylsäure, desto härter und weniger klebrig wird das wasserlösliche Copolymerisat. Es wird daher angestrebt, nur so viel der sauren Komponente einzupolymerisieren wie zur Erzielung einer guten Löslichkeit in Wasser unerläßlich ist.
Durch den Einsatz von 15 bis 50 Gew.-% der klebrigmachenden Alkyl(meth)acrylsäureester mit 2 bis 12 Kohlenstoffatomen im Alkylrest wird das harte wasserlösliche Copolymerisat haftklebrig eingestellt. Sie werden aus der Gruppe Ethylacrylat, Propylacrylat, Butylacrylat, Isobutylacrylat, Hexylacrylat, Heptylacrylat, 2-Ethylhexylacrylat, 2-Methylheptylacrylat, Iooctylacrylat, n-Octylacrylat, Isodecylacrylat, Isodecylmethacrylat, Laurylacrylat oder Laurylmethacrylat ausgewählt.

Zur weiteren Verbesserung der Wasserlöslichkeit werden hydroxylgruppenhaltige (Meth)acrylate einpolymerisiert.

Dabei wird beispielsweise 2-Hydroxyethyl(meth)acrylat, 2-Hydroxypropyl(meth)acrylat oder 4-Hydroxybutyl(meth)-acrylat, eingesetzt.

Durch Einbau von Fotoinitiatoren und die dadurch ermöglichte zusätzliche Vernetzung mit Hilfe von UV-Strahlen (Lampe oder Laser) wird die dynamische Scherfestigkeit im Bereich von 180-220°C signifikant verbessert. Die polymerisationsfähigen Fotoinitiatoren werden aus der Gruppe der photoreaktiven Acryloyloxy-Verbindungen ausgewählt. Genannt seien beispielsweise 4-Acryloyloxybenzophenon, 4(2-Acryloylethoxy)-phenyl(2-hydroxy-2-propyl)-keton, Phenyl-(1-acryloyloxy)-cyclohexylketon, 4-Acryloyloxyethoxybenzophenon, α-Methylenoxyacryloylbenzoinmethylether und 4-Acryloylaminobenzophenon. Das wasserlösliche Copolymerisat kann nach den üblichen Verfahren durch radikalische Polymerisation in organischen Lösemitteln hergestellt werden. Das Monomerengemisch wird bei einer Konzentration von etwa 50 Gew.-%- je nach dem Grad der Löslichkeit der speziellen, darin eingesetzten Monomeren- in Isopropanol oder Aceton und/oder in Gemischen von Isopropanol mit Aceton auf 55-75°C erwärmt. Beim Siedepunkt des Polymerisationsmediums wird dann mit Radikalbildnern. wie Azoisobuttersäurenitril oder Benzoylperoxid die Polymerisation initiiert. Enthält das Monomerengemisch Anteile von 2-Hydroxypropylmethacrylat in Kombination mit Acrylsäure, so kann unter dem Einfluß dieses Monomers die Reaktionsgeschwindigkeit der Polymerisation soweit verringert werden, daß die Polymerisationswärme mühelos abgeführt werden kann. Durch die regelnde Wirkung des o.g. Esters wird auch die Gefahr der Gelbildung, die durch Vernetzung während des Polymerisationsprozesses bedingt ist, verringert. Häufig empfiehlt sich die Verwendung einer den Prozeßverlauf zusätzlich regelnden Substanz, z.B. Tetrabrommethan. Gewöhnlich ist die Reaktion nach 6 bis 12 Stunden beendet.

Danach werden dem Copolymerisat Weichmacher, carboxyl- und/oder hydroxyl-gruppenhaltige klebrigmachende Harze, feuchthaltende Mittel, hydroxylgruppenhaltige Amine und mit Carboxylgruppen des Copolymerisates reagierende Vernetzer zugefügt.

Wasserlösliche Weichmacher, die gemäß Erfindung dem wasserlöslichen Copolymerisat in einer Menge von 50 bis 150 Gewichtsanteilen zugesetzt werden (Komponente b), sind aus der Gruppe der Polyoxyalkylene mit einer Molmasse bis 2000 Dalton ausgewählt. Bevorzugt werden Polyethylenglykol, Polypropylenglykol, Polyoxypropylen/Polyoxyethylen-Copolymer, Monoethylenglykoldimethylether, Polyethylenglykoldimethylether, Monoethylenglykolmonomethylether und/oder Polyethylenglykolmonomethylether verwendet.

Zur Erzielung der gewünschten Klebeeigenschaften, wie Tack und Klebkraft, empfiehlt sich der Zusatz von 0 bis 35 Gewichtsteilen carboxyl- oder hydroxylgruppenhaltigen klebrigmachenden Harzen wie z.B. modifiziertes Kolophoniumharz bzw. hydrierte oder disproportionierte Kolophoniumharz-Typen, Terpenphenolharze oder Polyterpenphenolharze, vorzugsweise zusammen mit geringen Mengen anionischer und nichtionischer Emulgatoren. Diese an sich in Wasser unlöslichen Harze werden von den wasserlöslichen Bestandteilen der Haftklebemasse kolloidal in Lösung gebracht. Geringe Zusätze von Emulgatoren können ihre Auflösung in Wasser beschleunigen.

Dabei wurde überraschenderweise gefunden, daß die in der Haftklebeschicht vorhandene Feuchtigkeit der wasserlöslichen Spleißbänder den Tack und die Haftung zum Papier positiv beeinflußt. Um daher einen gewissen Feuchtigkeitsgehalt sicherzustellen, kann der Rezeptur des Haftklebers ein feuchtfaltendes Mittel wie beispielsweise Glycerin oder Sorbit zugegeben werden.

Das freie Carboxylgruppen enthaltende Copolymerisat (a) wird gemäß Erfindung durch Zusatz von hydroxylgruppenhaltigen Aminen partiell neutralisiert und damit selbst nach der Vernetzung wasserlöslich gemacht. Dabei wurde überraschenderweise gefunden, daß die Neutralisation mit hydroxylgruppenhaltigen Aminen nicht nur eine ausgezeichnete Löslichkeit der Haftklebemasse in vernetztem Zustand selbst bei sehr unterschiedlichen pH-Werten (pH : 3-10) bewirkt, sondern auch einen positiven Einfluß auf die Benetzbarkeit bei der Beschichtung und auf das Beschichtungsbild ausübt. Als hydroxylgruppenhaltige Amine werden Alkanolamine oder ethoxylierte Amine eingesetzt. Zwecks Erreichen einer hohen thermischen Scherbelastbarkeit wird das wasserlösliche Copolymerisat mit Hilfe von mit Carboxylgruppen des Copolymerisates reagierenden Verbindungen vernetzt. Dazu geeignet sind unter anderem Metallchelate, Metallsäureester, Epoxid-, Aziridin-, Triazin-, Phenol- oder Aminoharze. Besonders bevorzugt werden Aluminium- und Zirconiumacetylacetonat.

Die erfindungsgemäßen Haftklebemassen zeichnen sich auch durch eine sehr hohe Soforthaftung auf Papier aus. Ferner wird ein Durchschlagen der Haftklebemassen durch Papier nicht beobachtet.
Zur Herstellung der wasserlöslichen Spleißbänder wird ein leicht repulpierbares Papier oder Vlies ein- oder beidseitig mit der erfindungsgemäßen wasserlöslichen Selbstklebemasse nach üblichen Verfahrensweisen beschichtet, getrocknet und ggf. nach Ausrüstung mit Trennpapier zu Rollen aufgewickelt und anschließend mittels üblicher Schneidvorrichtung in gewünschte Breiten geschnitten. Außer ihrer Verwendbarkeit für Spleißbänder können die wasserlöslichen Haftklebemassen für andere Zwecke eingesetzt werden, wie beispielsweise zur Herstellung von wasserdispergierbaren oder gut ablösbaren Etiketten sowie zur Herstellung von recyclingfähigen Verpackungsbändern.

Die Erfindung wird nachstehend anhand der folgenden Beispiele näher erläutert:

### Beispiel 1

In einem 1-Liter-Dreihalskolben, ausgestattet mit einem Rückflußkühler und Ankerrührer, werden 200 g eines Lösemittelgemisches aus 50 Gew.-% Aceton und 50 Gew.-% Isopropanol vorgelegt und zum Sieden gebracht. Zu dem siedenden Lösemittelgemisch wird innerhalb von 3 h ein Gemisch aus 140 g Acrylsäure, 50 g 2-Ethylhexylacrylat, 10 g 4-Acryloyloxybenzophenon und 1 g AIBN zudosiert. Nach einer dreistündigen Nachreaktion wurde das lösemittelhaltige Copolymerisat bis zu Raumtemperatur abgekühlt und wie folgt modifiziert.
Zu dem Copolymerisat wird unter ständigem Rühren 160 g Polyethylenglykol 400, 10 g Harz Bevilite 62-L, 20 g wasserhaltiges Glycerin, 20 g hydroxylgruppenhaltiges Amin Ethoduomeen T/25 und 160 g einer 5%igen Lösung Aluminiumacetylacetonat im Ethylacetat zugegeben.
Die so erhaltene Haftklebemasse wird auf eine siliconisierte Folie mit 60 g/m² Kleberauftrag beschichtet, 10 Min. im Trockenkanal bei 105°C getrocknet und danach der Bestrahlung durch UV-Lampe der Fa. IST (Typ U 350-M-I-DL) 30 sec stationär ausgesetzt (der Abstand UV-Lampe/Haftklebeschicht betrug 5 cm). Die thermisch und mittels UV-Strahlen vernetzte Haftklebeschicht wird beidseitig auf ein leichtes repulpierbares Teefilterpapier mit einer Grammatur von 12 g/m² zukaschiert.
Nach Abziehen der siliconisierten Folie wird ein doppelseitiges Spleißband erhalten, das für die Anwendung bei fliegendem Rollenwechsel in der Papierindustrie bestens geeignet ist.

Die Prüfung der dynamischen Scherfestigkeit, gemessen bei 130°C, 150°C, 180°C und 210°C, erfolgte auf einer Pappe nach Anwalzen mit 50 N bei einer Verklebungsfläche von 4 cm².

Außerdem wird die Wasserlöslichkeit der auf dem Teefilterpapier beschichteten Haftklebemasse getestet. In Anlehnung an praxisrelevante Bedingungen werden 12,5 cm² Spleißband in einem Aufschlaggerät bei 3000 U/min 15 Min. in 150 ml Wasser bei 20°C gerührt und die Auflösung des Haftklebers optisch beurteilt. Die Wasserlöslichkeitsprüfung erfolgte im neutralen und alkalischen Bereich bei pH=7 und pH=9.

Die ermittelten Prüfwerte (zum Vergleich wird ein kommerzielles Spleißband herangezogen) wurden tabellarisch zusammengefaßt.

**Tabelle 1**

| **Spleißband** | **dynamische Scherfestigkeit [N]** | | | | **Wasserlöslichkeit** | |
|---|---|---|---|---|---|---|
| | 130°C | 150°C | 180°C | 210°C | pH=7 | pH=9 |
| gemäß Beispiel 1 | 230 | 180 | 130 | 110 | gut | gut |
| kommerzielles Spleißband | 240 | 170 | 90 | 40 | gut | gut |

Beide geprüften Spleißbänder zeichnen sich durch eine gute Wasserlöslichkeit im neutralen und alkalischen Bereich aus.
Das gemäß Beispiel 1 hergestellte Spleißband ist bezüglich der dynamischen Scherfestigkeit besonders bei 180°C und 210°C dem kommerziellen Spleißband deutlich überlegen.

### Beispiele 2 bis 15

Diverse wasserlösliche Haftklebemassen gemäß der Erfindung (genaue Zusammensetzung des wasserlöslichen Copolymerisates wird in Tabelle 2 und die genaue Zusammensetzung der Haftklebemasse in Tabelle 3 dargestellt) werden auf eine siliconisierte Folie mit 60 g/m² Kleberauftrag beschichtet, 10 Min. im Trockenkanal getrocknet und danach einer UV-Lampe der Fa. IST (Typ U 350-M-1-DL) 30 sec. stationär ausgesetzt (der Abstand UV-Lampe/Haftklebeschicht betrug 5 cm). Die vernetzten Haftklebeschichten werden beidseitig auf ein Teefilterpapier (Grammatur : 12 g/m²) zukaschiert. Erhalten werden doppelseitige Spleißbänder, die auf dynamische Scherfestigkeit, gemessen bei 130°C, 150°C, 180°C und 210°C und Wasserlöslichkeit (bei pH = 3,7 und 10) getestet werden. Die Ausprüfung erfolgte auf einer Pappe nach Anwalzen mit 50 N bei einer Verklebungsfläche von 4 cm². Die ermittelten Werte der dynamischen Scherfestigkeit und der Klebkraft sind in Tabelle 4 zusammengefaßt.

### ABKÜRZUNGSVERZEICHNIS

AS - Acrylsäure
APS - β-Acryloyloxypropionsäure
2-EHA - 2-Ethylhexylacrylat
BA - Butylacrylat
2-HEA - 2-Hydroxyethylacrylat
2-HPMA - 2-Hydroxypropylmethacrylat
ABP - 4-Acryloyloxybenzophenon
ZLI 3331 - 4(2-Acryloylethoxy)-phenyl(2-hydroxy-2-propyl)-keton
AEBP - 4-Acryloyloxyethoxybenzophenon
PEG300 - Polyethylenglykol mit einer Molmasse von 300 Dalton
PPG400 - Polypropylenglykol mit einer Molmasse von 400 Dalton
PEG-DME 500 - Polyethylenglykoldimethylether mit einer Molmasse von 500 Dalton
B 106 - Kolophoniumharz/Fa. Hercules
R 731 - Kolophoniumharz/Fa. Abieta Chemie
GN - Glycerin
T/25 - - ethoxyliertes Amin Ethoduomeen T/25
C/25 - ethoxyliertes Amin Ethomeen C/25
TEA - Triethanolamin
AIACA - Aluminiumacetylacetonat
ZrACA - Zirconiumacetylacetonat
325 - Aminoharz Cymel 325/Fa.Cyanamid

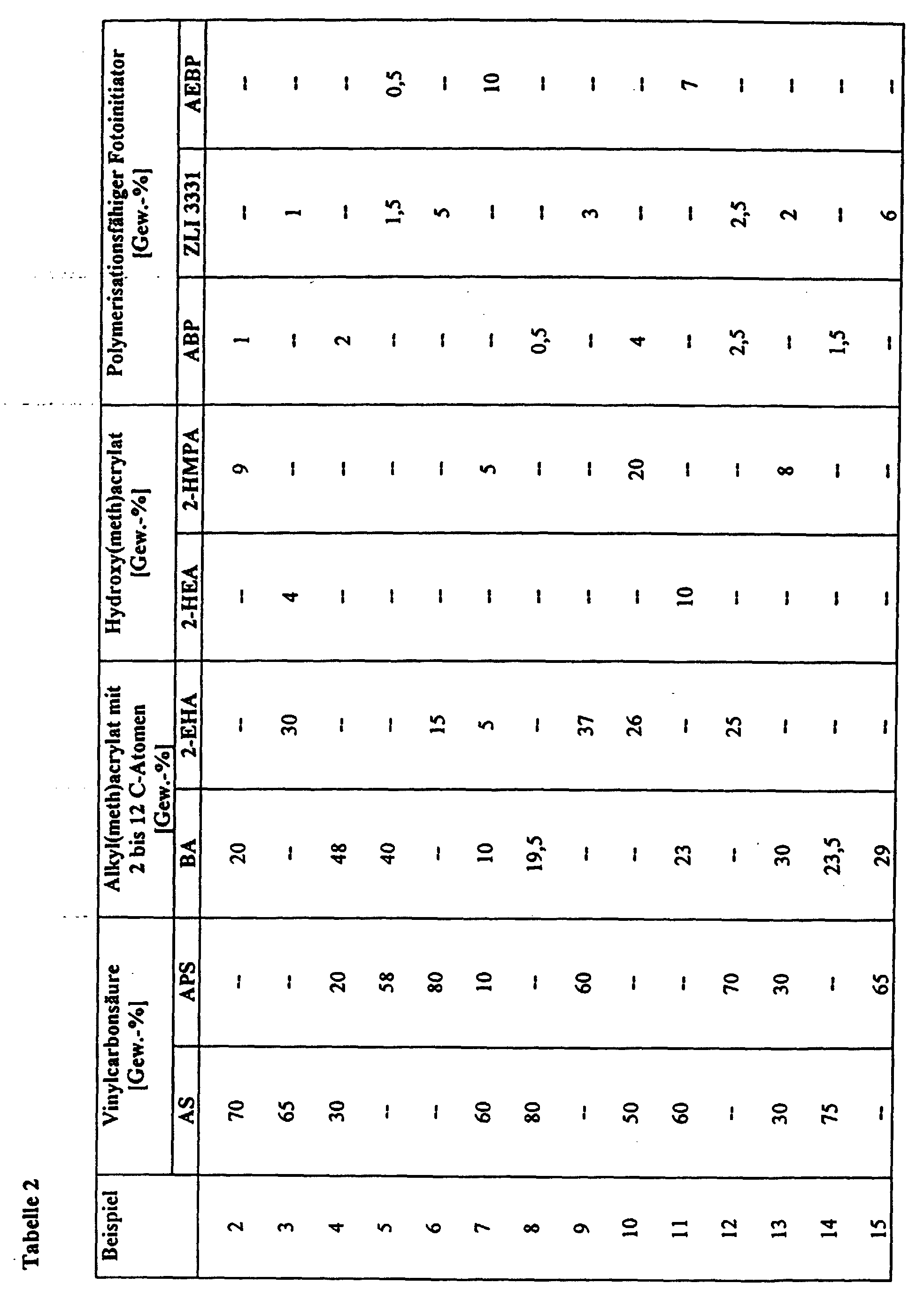

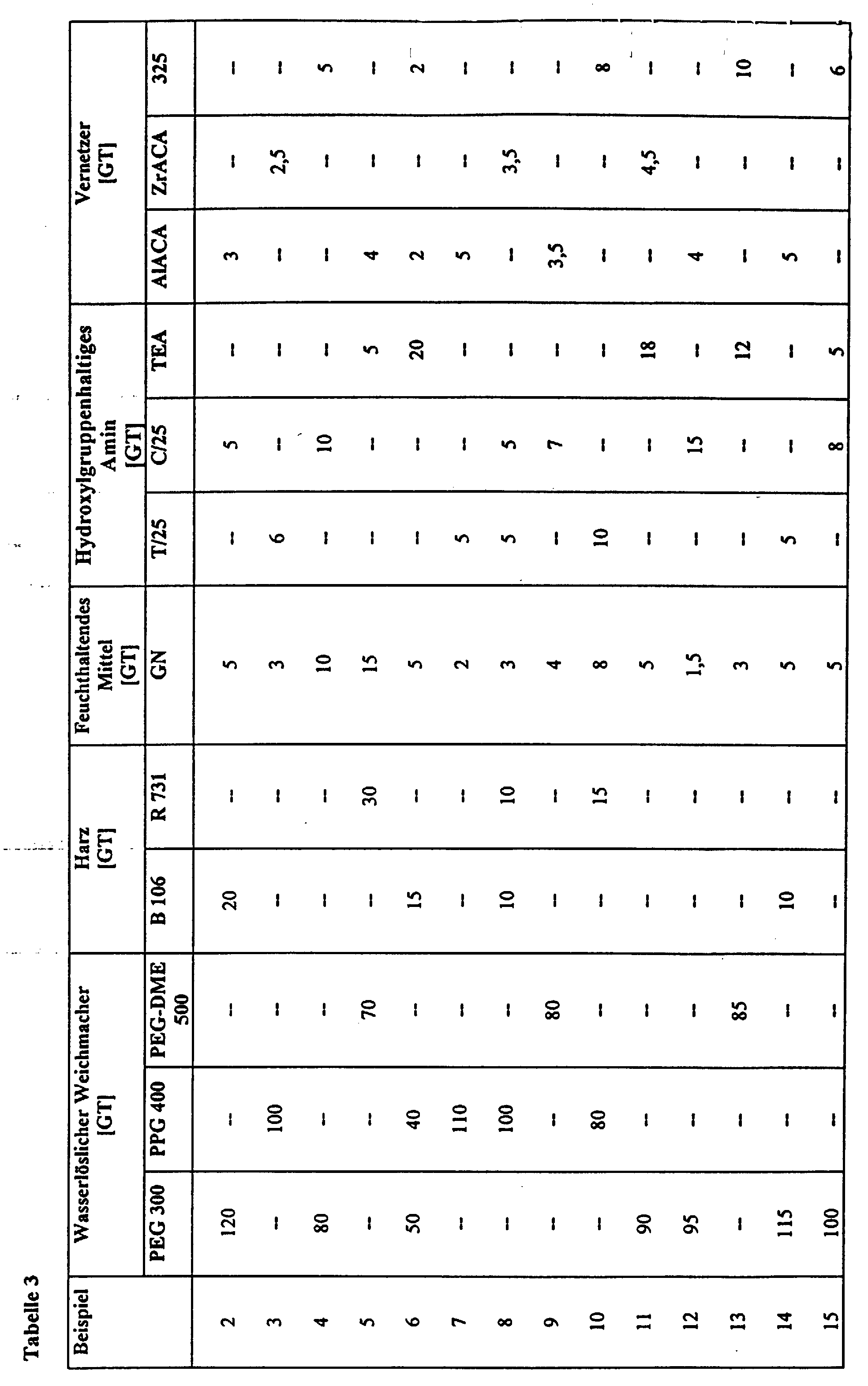

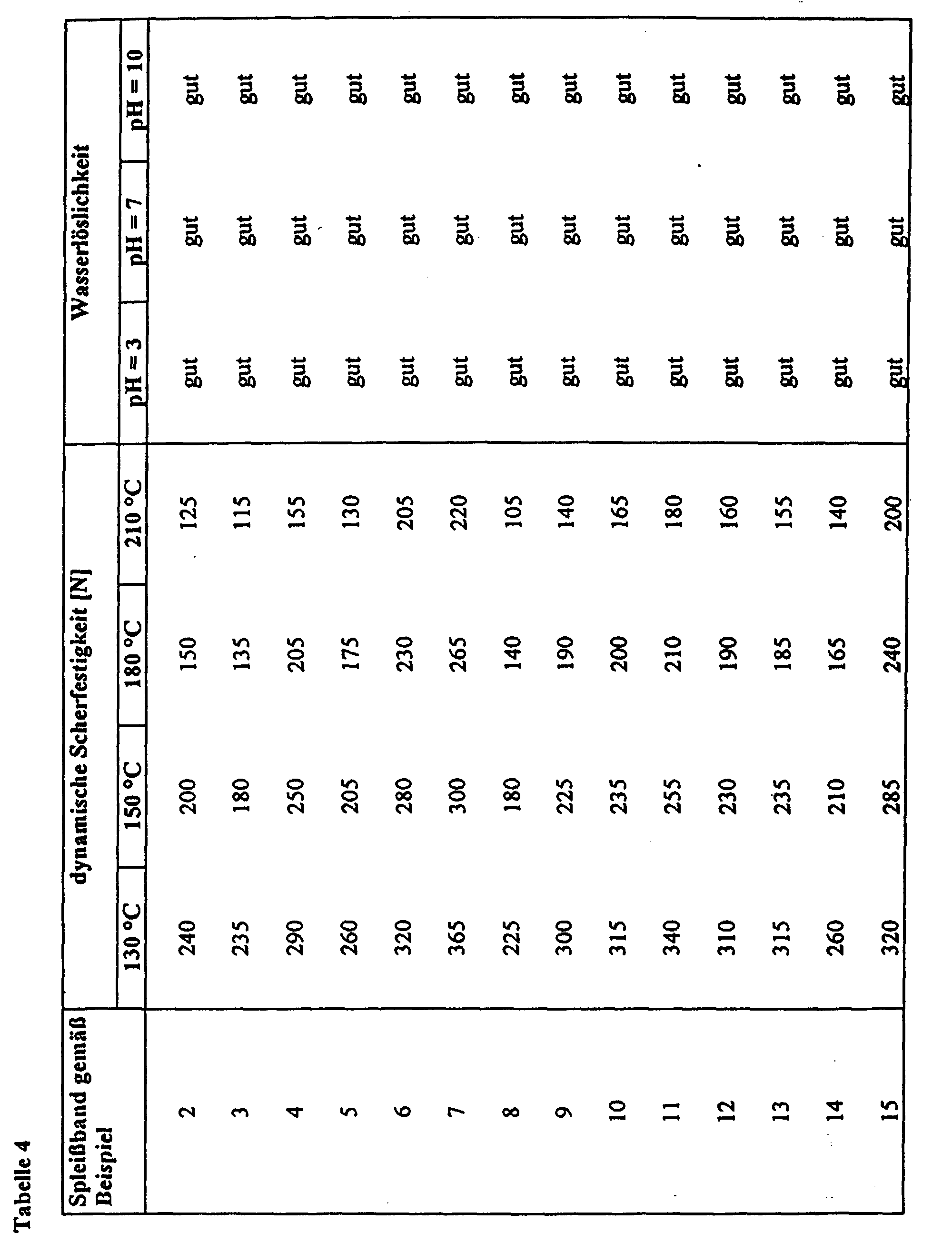

Die gemäß der Erfindung hergestellten wasserlöslichen Spleißbänder zeichnen sich durch eine hohe dynamische Scherfestigkeit bei erhöhten Temperaturen bis zu ca. 210°C aus. Sie besitzen dabei eine gute Wasserlöslichkeit im breiten (3 bis 10) pH-Bereich.

## Patentansprüche

1. Bei hoher Temperatur scherfeste wasserlösliche Haftklebemasse, enthaltend
a) 100 Gewichtsteile eines wasserlöslichen Copolymerisats aus
- mindestens 50 Gew.-% wenigstens einer Vinylcarbonsäure
- mindestens 15 Gew.-% wenigstens eines klebrigmachenden Alkyl(meth)acrylsäureesters mit 2 bis 12 Kohlenstoffatomen im Alkylrest
- 0 bis 20 Gew.-% wenigstens eines hydroxylgruppenhaltigen (Meth)acrylats
- 0,05 bis 15 Gew.-% wenigstens eines polymerisationsfähigen Fotoinitiators
b) 50 bis 150 Gewichtsteile wenigstens eines wasserlöslichen Weichmachers aus der Gruppe der Polyoxyalkylene mit einer Molekularmasse bis 2000 Dalton
c) 0 bis 35 Gewichtsteile eines carboxyl- und/oder hydroxylgruppenhaltigen klebrigmachenden Harzes
d) 1 bis 20 Gewichtsteile eine hydroxylgruppenhaltigen Amins
e) 0,05 bis 10 Gewichtsteile eines mit Carboxylgruppen des wasserlöslichen Copolymerisats reagierenden Vernetzers.

2. Haftklebemasse nach Anspruch 1, dadurch gekennzeichnet, daß sie 1 bis 30 Gew.-% eines feuchthaltenden Mittels aufweist.

3. Haftklebemasse nach Anspruch 1 oder 2, dadurch gekennzeichnet, daß sie einen mit Carboxylgruppen reagierenden Vernetzers enthält.

4. Haftklebemasse nach Anspruch 1, dadurch gekennzeichnet, daß die Vinylcarbonsäure aus der Gruppe Acrylsäure, Methacrylsäure, β-Acryloyloxypropionsäure, Vinylessigsäure, Fumarsäure, Crotonsäure, Trichloracrylsäure, Dimethylacrylsäure, Aconitsäure oder Itaconsäure ausgewählt ist.

5. Haftklebemasse nach Anspruch 1, dadurch gekennzeichnet, daß der klebrigmachende Alkyl(meth)acrylsäureester mit 2 bis 12 Kohlenstoffatomen im Alkylrest aus der Gruppe Ethylacrylat, Propylacrylat, Butylacrylat, Isobutylacrylat, Hexylacrylat, Heptylacrylat, 2-Ethylhexylacrylat, 2-Methylheptylacrylat, Isooctylacrylat, n-Ocitylacrylat, Isodecylacrylat, Isodecylmethacrylat, Laurylacrylat oder Laurylmethacrylat ausgewählt ist.

6. Haftklebemasse nach Anspruch 1, dadurch gekennzeichnet, daß das hydroxylgruppenhaltige (Meth)acrylat ein 2-Hydroxyethyl(meth)acrylat, 2-Hydroxypropyl(meth)acrylat oder 4-Hydroxybutyl(meth)acrylat ist.

7. Haftklebemasse nach Anspruch 1, dadurch gekennzeichnet, daß der polymerisationsfähige Fotoinitiator ein 4-Acryloyloxybenzophenon, 4(2-Acryloylethoxy)-phenyl(2-hydroxy-2-propyl)-keton, Phenyl-(l-acryloyloxy)-cyclohexylketon, 4-Acryloyloxyethoxybenzophenon, α-Methylenoxyacryloylben zoinmethylether oder 4-Acryloylaminobenzophenon ist.

8. Haftklebemasse nach Anspruch 1, dadurch gekennzeichnet, daß der wasserlösliche Weichmacher mit einer Molekularmasse bis 2000 Dalton ein Polyethylenglykol, Polypropylenglykol, Polyoxypropylen/Polyoxyethylen-Copolymer, Monoethylenglykoldimethylether, Polyethylenglykoldimethylether, Monoethylenglykolmonomethylether oder Polyethylenglykolmonomethylether ist.

9. Haftklebemasse nach Anspruch 1, dadurch gekennzeichnet, daß das carboxyl- und/oder hydroxylgruppenhaltige Harz aus der Gruppe der Kolophoniumharze, Terpenphenolharze oder Polyterpenphenolharze ausgewählt ist.

10. Haftklebemasse nach Anspruch 1, dadurch gekennzeichnet, daß das feuchthaltende Mittel Glycerin oder Sorbit ist.

11. Haftklebemasse nach Anspruch 1, dadurch gekennzeichnet, daß das hydroxylgruppenhaltige Amin ein Alkanolamin oder ein ethoxyliertes Amin ist.

12. Haftklebemasse nach Anspruch 1, dadurch gekennzeichnet, daß der Vernetzer ein Metallchelat, Metallsäureester, ein Epoxid-, Aziridin-, Triazin-, Phenol- oder ein Aminoharz ist.

13. Verfahren zur Herstellung der Haftklebemasse nach den Ansprüchen 1 bis 12, gekennzeichnet durch die Arbeitsschritte:
In einem ersten Arbeitsschritt wird ein Lösemittelgemisch aus Kohlenwasserstoffen vorgelegt und zum Sieden gebracht, in einem zweiten Arbeitsschritt werden darin innerhalb einer längeren Zugabezeit (bis zu 3 h)
a) die Komponenten des wasserlöslichen Copolymerisats
- Vinylcarbonsäure
- klebrigmachender Alkyl(meth)acrylsäureester mit 2 bis 12 Kohlenstoffatomen im Alkylrest
- hydroxylgruppenhaltiges (Meth)acrylat
- polymerisationsfähiger Fotoinitiator
b) wasserlöslicher Weichmacher
c) klebrigmachendes Harz
d) hydroxylgruppenhaltiges Amin
e) Vernetzer
zudosiert; nach einer mehrstündigen Nachreaktion wird das lösemittelhaltige Copolymerisat in einem dritten Arbeitsschritt bis zur Raumtemperatur abgekühlt und in einem weiteren Schritt wird die erhaltene Haftklebemasse auf eine dehäsiv ausgerüstete Folie aufkaschiert und bei ca. 105^{o}C getrocknet, sodann die aufkaschierte Schicht einer Bestrahlung mit UV-Strahlen ausgesetzt und vernetzt; zuletzt wird die vernetzte Haftklebeschicht beidseitig auf ein Trägerpapier zukaschiert und nach Abziehen der dehäsiven Folie wird ein doppelseitiges Spleißband erhalten.

14. Verfahren nach Anspruch 13, dadurch gekennzeichnet, daß die UV-Vernetzung mittels spektralem Licht einer UV-Lampe oder monochromatischem Licht eines Lasers durchgeführt wird.

15. Verwendung der Haftklebemasse nach den Ansprüchen 1 bis 12 zur Herstellung von Spleißbändern mit hoher thermischer Scherbelastbarkeit.

## Claims

1. Water-soluble pressure-sensitive adhesive mass shear-resistant at high temperature, containing
a) 100 parts by weight of a water-soluble copolymer of
- at least 50%-wt. of at least one vinylcarboxylic acid
- at least 15%-wt. of at least one tackifying alkyl-(meth)acrylic ester having 2 to 12 carbon atoms in the alkyl residue
- 0 to 20%-wt. of at least one hydroxyl groups-containing (meth)acrylate
- 0.05 to 15%-wt. of at least one polymerizable photoinitiator
b) 50 to 150 parts by weight of at least one water-soluble plasticizer from the group of polyoxyalkylenes having a molecular mass of up to 2000 Dalton
c) 0 to 35 parts by weight of a carboxyl and/or hydroxyl groups-containing tackifying resin
d) 1 to 20 parts by weight of a hydroxyl groups-containing amine
e) 0.05 to 10 parts by weight of a cross-linking agent reacting with carboxyl groups of the water-soluble copolymer.

2. Pressure-sensitive adhesive mass according to claim 1, characterized in that it comprises 1 to 30%-wt. of a humectant.

3. Pressure-sensitive adhesive mass according to claim 1 or 2, characterized in that it contains a cross-linking agent reacting with carboxyl groups.

4. Pressure-sensitive adhesive mass according to claim 1, characterized in that the vinylcarboxylic acid is selected from the group of acrylic acid, methacrylic acid, β-acryloyloxypropionic acid, vinylacetic acid, fumaric acid, crotonic acid, trichloroacrylic acid, dimethylacrylic acid, aconitic acid or itaconic acid.

5. Pressure-sensitive adhesive mass according to claim 1, characterized in that the tackifying alkyl(meth)acrylic ester having 2 to 12 carbon atoms in the alkyl residue is selected from the group of ethyl acrylate, propyl acrylate, butyl acrylate, isobutyl acrylate, hexyl acrylate, heptyl acrylate, 2-ethylhexyl acrylate, 2-methylheptyl acrylate, isooctyl acrylate, n-octyl acrylate, isodecyl acrylate, isodecyl methacrylate, lauryl acrylate or lauryl methacrylate.

6. Pressure-sensitive adhesive mass according to claim 1, characterized in that the hydroxyl groups-containing (meth)acrylate is a 2-hydroxyethyl (meth)acrylate, 2-hydroxypropyl (meth)acrylate or 4-hydroxybutyl (meth)acrylate.

7. Pressure-sensitive adhesive mass according to claim 1, characterized in that the polymerizable photoinitiator is a 4-acryloyl oxybenzophenon, 4(2-acryloylethoxy)-phenyl-(2-hydroxy-2-propyl)-ketone, phenyl-(1-acryloyloxy)-cyclohexyl ketone, 4-acryloyloxyethoxybenzophenon, α-methyleneoxyacryloyl benzoine methyl ether or 4-acryloyl aminobenzophenon.

8. Pressure-sensitive adhesive mass according to claim 1, characterized in that the water-soluble plasticizer having a molecular mass of up to 2000 dalton is a polyethylene glycol, polypropylene glycol, polyoxypropylene-polyoxyethylene copolymer, monoethylene glycol dimethyl ether, polyethylene glycol dimethyl ether, monoethylene glycol monomethyl ether or polyethylene glycol monomethyl ether.

9. Pressure-sensitive adhesive mass according to claim 1, characterized in that the carboxyl and/or hydroxyl groups-containing resin is selected from the group of collophony resins, terpene phenol resins or polyterpene phenol resins.

10. Pressure-sensitive adhesive mass according to claim 1, characterized in that the humectant is glycerin or sorbite.

11. Pressure-sensitive adhesive mass according to claim 1, characterized in that the hydroxyl groups-containing amine is an alkanol amine or an ethoxylated amine.

12. Pressure-sensitive adhesive mass according to claim 1, characterized in that the cross-linking agent is a metal chelate, metallic acid ester, an epoxide, aziridine, triazine, phenol or an amino resin.

13. Method for producing the pressure-sensitive adhesive mass according to claims 1 to 12, characterized by the following steps:
in a first step a solvent mixture of hydrocarbons is prepared and brought to the boil,
in a second step the following substances are added thereto over a prolonged addition time (up to 3 h)
a) the components of the water-soluble copolymer
- vinylcarboxylic acid
- tackifying alkyl(meth)acrylic ester having 2 to 12 carbon atoms in the alkyl residue
- hydroxyl groups-containing (meth)acrylate
- polymerizable photoinitiator
b) water-soluble plasticizer
c) tackifying resin
d) hydroxyl groups-containing amine
e) cross-linking agent;
after a secondary reaction lasting several hours the solvent-containing copolymer is, in a third step, cooled down to room temperature, and in a further step the resultant pressure-sensitive adhesive mass is laminated onto a sheet or foil that has been rendered dehesive and is dried at about 105 °C, whereupon the laminated layer is exposed to irradiation with ultraviolet rays and cross-linked; finally, the cross-linked pressure-sensitive adhesive layer is laminated onto both sides of a carrier paper and, after peeling off of the dehesive sheet or foil, a double-sided splicing tape is obtained.

14. Method according to claim 13, characterized in that the ultraviolet cross-linking is performed by means of the spectral light of an ultraviolet lamp or by means of the monochromatic light of a laser.

15. Use of the pressure-sensitive adhesive mass according to claims 1 to 12 for producing splicing tapes having high thermal shear resistance.

## Revendications

1. Composition adhésive soluble dans l'eau résistante au cisaillement à température élevée, contenant
a) 100 parties en poids d'un copolymère soluble dans l'eau
- d'au moins 50 % en poids d'au moins un acide vinylcarboxylique
- d'au moins 15 % en poids d'au moins un ester alkylique de l'acide (méth)acrylique à effet adhésif comportant 2 à 12 atomes de carbone dans le résidu alkyle
- de 0 à 20 % en poids d'au moins un (méth)acrylate comportant des groupes hydroxyle
- de 0,05 à 15 % en poids d'au moins un photoinitiateur polymérisable
b) 50 à 150 parties en poids d'au moins un plastifiant soluble dans l'eau du groupe de polyoxyalkylènes présentant une masse moléculaire jusqu'à 2000 Daltons,
c) 0 à 35 parties en poids d'une résine à effet adhésif comportant un groupe carboxyle et/ou hydroxyle
d) 1 à 20 parties en poids d'une amine comportant un groupe hydroxyle
e) 0,05 à 10 parties en poids d'un agent de réticulation réagissant avec les groupes carboxyle du copolymère soluble dans l'eau.

2. Composition adhésive selon la revendication 1, caractérisée en ce qu'elle contient 1 à 30 % en poids d'un agent retenant l'humidité.

3. Composition adhésive selon la revendication 1 ou 2, caractérisée en ce qu'elle contient un agent de réticulation réagissant avec les groupes carboxyle.

4. Composition adhésive selon la revendication 1, caractérisée en ce que l'acide vinylcarboxylique est choisi dans le groupe constitué par l'acide acrylique, l'acide (méth)acrylique, l'acide β-acryloyloxypropionique, l'acide vinylacétique, l'acide fumarique, l'acide crotonique, l'acide trichloroacrylique, l'acide diméthylacrylique, l'acide aconitique et l'acide itaconique.

5. Composition adhésive selon la revendication 1, caractérisée en ce que l'ester alkylique de l'acide (méth)acrylique à effet adhésif, comportant 2 à 12 atomes de carbone dans le reste alkyle, est choisi dans le groupe constitué par l'acrylate d'éthyle, l'acrylate de propyle, l'acrylate de butyle, l'acrylate d'isobutyle, l'acrylate d'hexyle, l'acrylate d'heptyle, l'acrylate de 2-éthylhexyle, l'acrylate de 2-méthylheptyle, l'acrylate d'isooctyle, l'acrylate de n-octyle, l'acrylate d'isodécyle, le méthacrylate d'isodécyle, l'acrylate de lauryle ou le méthacrylate de lauryle.

6. Composition adhésive selon la revendication 1, caractérisée en ce que le (méth)acrylate comportant un ou plusieurs groupes hydroxyle est un (méth)acrylate de 2-hydroxy-éthyle, un (méth)acrylate de 2-hydroxypropyle ou un (méth)acrylate de 4-hydroxybutyle.

7. Composition adhésive selon la revendication 1, caractérisée en ce que le photoinitiateur polymérisable est une 4-acryloyloxybenzophénone, une 4-(2-acryloyléthoxy)-phényl-(2-hydroxy-2-propyl)-cétone, une phényl-(1-acryloyloxy)-cyclohexylcétone, une 4-acryloyloxybenzophénone, un α-méthylèneoxyacryloylbenzoïneméthyléther ou une 4-acryloylaminobenzophénone.

8. Composition adhésive selon la revendication 1, caractérisée en ce que le plastifiant soluble dans l'eau, présentant une masse moléculaire allant jusqu'à 2000 Daltons, est un polyéthylèneglycol, un polypropylèneglycol, un copolymère de polyoxypropylène et de polyoxyéthylène, un monoéthylèneglycoldiméthyléther, un polyéthylèneglycoldiméthyléther, un monoéthylèneglycolmonométhyléther ou un polyéthylèneglycolmonométhyléther.

9. Composition adhésive selon la revendication 1, caractérisée en ce que la résine comportant un groupe carboxyle et/ou hydroxyle est choisie dans le groupe constitué par les résines colophaniques, terpènephénoliques ou polyterpènephénoliques.

10. Composition adhésive selon la revendication 1, caractérisée en ce que l'agent retenant l'humidité est de la glycérine ou du sorbitol.

11. Composition adhésive selon la revendication 1, caractérisée en ce que l'amine comportant un groupe hydroxyle est une alkanolamine ou une amine éthoxylée.

12. Composition adhésive selon la revendication 1, caractérisée en ce que l'agent de réticulation est un chélate métallique, un ester d'un acide métallique, une résine époxyde, aziridinique, triazinique, phénolique ou amino.

13. Procédé pour la production de la composition adhésive selon les revendications 1 à 12, caractérisé par les étapes suivantes :
Dans une première étape, on dispose au préalable un mélange de solvants composé d'hydrocarbures et on l'amène à ébullition, dans la deuxième étape, on y ajoute en dosant, sur une longue durée d'addition (jusqu'à 3 h) :
a) les composants du copolymère soluble dans l'eau
- l'acide vinylcarboxylique
- l'ester alkylique de l'acide (méth)acrylique à effet adhésif comportant 2 à 12 atomes de carbone dans le résidu alkyle
- le (méth)acrylate comportant le groupe hydroxyle
- le photoinitiateur polymérisable
b) le plastifiant soluble dans l'eau
c) la résine à effet adhésif
d) l'amine comportant le groupe hydroxyle
e) l'agent de réticulation ;
après un temps de réaction ultérieure de plusieurs heures, on refroidit le copolymère contenant le solvant, dans une troisième étape, à température ambiante, puis, dans une autre étape, la composition adhésive est encollée sur un film pourvu d'une couche non collante et séchée à environ 105 °C, puis on soumet la couche encollée à un faisceau de rayons UV pour la réticulation ;
enfin, la couche adhésive réticulée est encollée des deux côtés sur un papier support et on obtient une bande épissée double face après avoir enlevé le film non collant.

14. Procédé selon la revendication 13, caractérisé en ce que la réticulation par les rayons UV est réalisée à l'aide d'une lumière spectrale émise par une lampe UV ou d'une lumière monochromatique émise par un laser.

15. Utilisation de la composition adhésive selon les revendications 1 à 12 pour la production de bandes épissées présentant une résistance élevée à la sollicitation au cisaillement thermique.
